# EUROPEAN PATENT SPECIFICATION

(11) **EP 3 570 512 B1**
(45) Date of publication and mention of the grant of the patent: **24.05.2023**
(21) Application number: 17891473.5
(22) Date of filing: 22.12.2017
(51) Int. Cl.: H04L 61/4511

(54) **DOMAIN NAME RESOLUTION METHOD, SERVER AND STORAGE MEDIUM**
VERFAHREN ZUR AUFLÖSUNG VON DOMÄNENNAMEN, SERVER UND SPEICHERMEDIUM
PROCÉDÉ DE RÉSOLUTION DE NOM DE DOMAINE, SERVEUR ET SUPPORT DE STOCKAGE

(30) Priority: 11.01.2017 CN 201710021111
(43) Date of publication of application: 20.11.2019
(73) Proprietor: Tencent Technology (Shenzhen) Company Limited, Shenzhen, Guangdong 518057 (CN)
(72) Inventor: JIANG, Fengbo, Shenzhen Guangdong 518057 (CN); WANG, Hailong, Shenzhen Guangdong 518057 (CN); CHEN, Fangzhou, Shenzhen Guangdong 518057 (CN)
(74) Representative: Eisenführ Speiser
(86) International application number: PCT/CN2017/117904
(87) International publication number: WO 2018/130061

(56) References cited:
- CN-A- 101 102 336
- CN-A- 102 075 432
- CN-A- 104 917 851
- CN-A- 106 790 762
- US-A1- 2004 073 707
- US-A1- 2004 267 907
- US-A1- 2009 300 191
- Anonymous: "Hash table - Wikipedia", , 8 December 2016 (2016-12-08), XP055737939, Retrieved from the Internet: URL:https://en.wikipedia.org/w/index.php?t itle=Hash_table&oldid=753684620 [retrieved on 2020-10-08]
- MOCKAPETRIS ISI P: "DOMAIN NAMES - IMPLEMENTATION AND SPECIFICATION; rfc1035.txt", DOMAIN NAMES - IMPLEMENTATION AND SPECIFICATION; RFC1035.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 November 1987 (1987-11-01), XP015005974,

## Description

### RELATED APPLICATION

This application claims priority to Chinese Patent Application No. 2017100211114, titled "DOMAIN NAME RESOLUTION METHOD AND APPARATUS" filed with the Chinese Patent Office on January 11, 2017.

### FIELD OF THE TECHNOLOGY

This application relates to the technical field of computers, and in particular to a domain name resolution method, a server, and a storage medium.

### BACKGROUND OF THE DISCLOSURE

With the development of computer technologies, obtaining information from the Internet by means of computers becomes increasingly popular. When obtaining information from the Internet, a user needs an Internet Protocol address (IP address), but it is inconvenient to use the IP address directly. In the conventional technology, a mapping relationship between domain names and IP addresses is established. After a domain name that a user requests to resolve is obtained, an IP address having a mapping relationship with the domain name is obtained through resolution based on the obtained domain name, and then the Internet is accessed based on the IP address.

However, in the conventional domain name resolution manner, after a domain name resolution request packet is obtained, resolution is performed based on each layer of data protocol of the domain name resolution request packet until an IP address corresponding to a domain name to be resolved is obtained through resolution. Multiple data replications are required in an entire resolution process, resulting in low domain name resolution efficiency. The domain name system is disclosed by RFC 1035.

### SUMMARY

According to various embodiments of this application, a domain name resolution method, a server, and a storage medium are provided.

A domain name resolution method is provided, which includes:
obtaining, by a server, a domain name resolution request packet;
storing, by the server, the obtained domain name resolution request packet in a first cache area;
modifying, by the server in the first cache area, header data in the cached domain name resolution request packet, to obtain header data of a domain name resolution response packet corresponding to the cached domain name resolution request packet, comprising:
   determining a head address pointer of the domain name resolution request packet cached in the first cache area;
   determining an address pointer offset of to-be-modified data in the domain name resolution request packet cached in the first cache area, the to-be-modified data indicates different data in the respective header data of the domain name resolution request packet and the domain name resolution response packet corresponding to the domain name resolution request packet;
   positioning the to-be-modified data in the first cache area based on the head address pointer and the address pointer offset;
   modifying the positioned to-be-modified data into data in the domain name resolution response packet that corresponds to the to-be-modified data;
extracting, by the server, a requested record type and a domain name to be resolved in the cached domain name resolution request packet;
searching, by the server, a second cache area for pre-cached response data that corresponds to the extracted domain name and has the extracted record type; and
combining, by the server, the pre-cached response data with the modified domain name resolution request packet, to obtain a domain name resolution response packet.

A server including a memory and a processor is provided, where the memory stores computer-readable instructions, and the computer-readable instructions, when being executed by the processor, cause the processor to perform the following steps:
obtaining a domain name resolution request packet;
caching the obtained domain name resolution request packet in a first cache area;
modifying, in the first cache area, header data in the cached domain name resolution request packet, to obtain header data of a domain name resolution response packet corresponding to the cached domain name resolution request packet, comprising:
   determining a head address pointer of the domain name resolution request packet cached in the first cache area;
   determining an address pointer offset of to-be-modified data in the domain name resolution request packet cached in the first cache area, the to-be-modified data indicates different data in the respective header data of the domain name resolution request packet and the domain name resolution response packet corresponding to the domain name resolution request packet;
   positioning the to-be-modified data in the first cache area based on the head address pointer and the address pointer offset;
   modifying the positioned to-be-modified data into data in the domain name resolution response packet that corresponds to the to-be-modified data;
extracting a requested record type and a domain name to be resolved in the cached domain name resolution request packet;
searching a second cache area for pre-cached response data that corresponds to the extracted domain name and has the extracted record type; and
combining the pre-cached response data with the modified domain name resolution request packet, to obtain a domain name resolution response packet.

A non-volatile storage medium storing computer-readable instructions is provided. The computer-readable instructions, when being executed by one or more processors, cause the one or more processors to perform the following steps:
obtaining a domain name resolution request packet;
caching the obtained domain name resolution request packet in a first cache area;
modifying, in the first cache area, header data in the cached domain name resolution request packet, to obtain header data of a domain name resolution response packet corresponding to the cached domain name resolution request packet, comprising:
   determining a head address pointer of the domain name resolution request packet cached in the first cache area;
   determining an address pointer offset of to-be-modified data in the domain name resolution request packet cached in the first cache area, the to-be-modified data indicates different data in the respective header data of the domain name resolution request packet and the domain name resolution response packet corresponding to the domain name resolution request packet;
   positioning the to-be-modified data in the first cache area based on the head address pointer and the address pointer offset;
   modifying the positioned to-be-modified data into data in the domain name resolution response packet that corresponds to the to-be-modified data;
extracting a requested record type and a domain name to be resolved in the cached domain name resolution request packet;
searching a second cache area for pre-cached response data that corresponds to the extracted domain name and has the extracted record type; and
combining the pre-cached response data with the modified domain name resolution request packet, to obtain a domain name resolution response packet.

Details of one or more embodiments of this application are provided in the following accompanying drawings and descriptions. Other features, objectives, and advantages of this application become more obvious with reference to the specification, the accompanying drawings, and the claims.

### BRIEF DESCRIPTION OF THE DRAWINGS

To describe the technical solutions in the embodiments of this application more clearly, the accompanying drawings required for describing the embodiments are briefly described hereinafter. Apparently, the accompanying drawings in the following description show merely some embodiments of this application, and a person of ordinary skill in the art may obtain other accompanying drawings from these accompanying drawings without creative efforts.
FIG. 1 is a diagram showing an application environment of a domain name resolution method according to an embodiment;
FIG.2 is a schematic diagram showing an internal structure of a server configured to implement a domain name resolution method according to an embodiment;
FIG.3 is a schematic flowchart of a domain name resolution method according to an embodiment;
FIG.4 is a schematic flowchart showing a process of obtaining a domain name resolution request packet by using a selected resolution thread according to an embodiment;
FIG.5 is an internal architectural diagram of a domain name resolution server according to an embodiment;
FIG.6 is a schematic flowchart showing the claimed process of modifying, in a first cache area, header data in a cached domain name resolution request packet, to obtain header data of a domain name resolution response packet corresponding to the cached domain name resolution request packet according to an embodiment;
FIG.7 is a schematic flowchart showing a process of searching a second cache area for pre-cached response data that corresponds to an extracted domain name and has an extracted record type according to an embodiment;
FIG.8 is a schematic flowchart showing a process of combining a pre-cached response data with a modified domain name resolution request packet, to obtain a domain name resolution response packet according to an embodiment;
FIG.9 is a schematic flowchart of a domain name resolution method according to another embodiment;
FIG. 10 is a logical diagram of a domain name resolution process according to an embodiment;
FIG. 11 is a structural block diagram of a server according to an embodiment;
FIG. 12 is a structural block diagram of a server according to another embodiment; and
FIG. 13 is a structural block diagram of a server according to still another embodiment.

### DESCRIPTION OF EMBODIMENTS

To make the objectives, technical solutions, and advantages of this application clearer and more comprehensible, this application is described in detail with reference to the accompanying drawings and embodiments hereinafter. It should be understood that the specific embodiments described herein are merely used to explain this application but are not intended to limit this application.

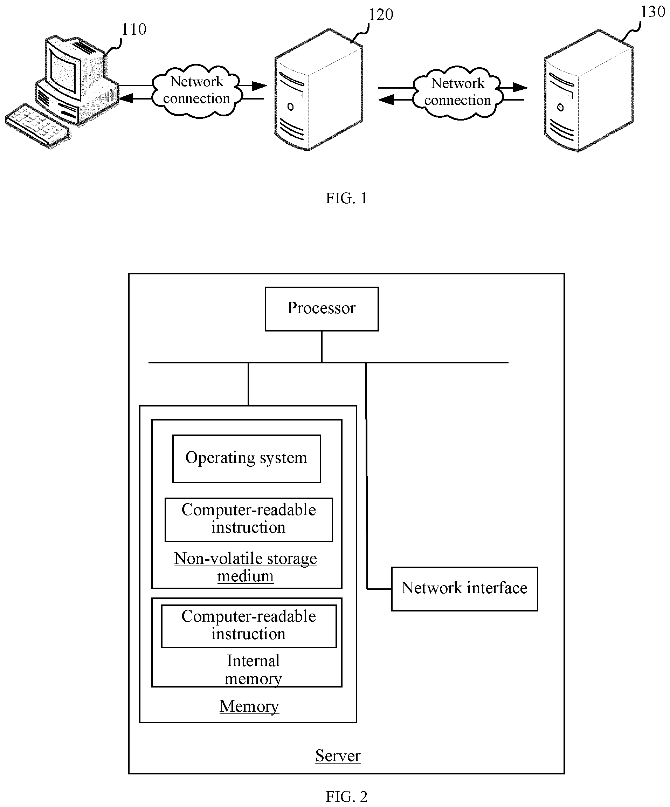

FIG.1 is a diagram showing an application environment of a domain name resolution method according to an embodiment. Referring to FIG.1, the domain name resolution method is applied to a domain name resolution system. The domain name resolution system includes a terminal 110, a domain name resolution server 120, and an authorized domain name server 130. The terminal 110 is connected to the domain name resolution server 120 over a network, and the domain name resolution server 120 is connected to the authorized domain name server 130 over a network. The terminal 110 may be a desktop terminal or a mobile terminal. The mobile terminal may be at least one of a mobile phone, a tablet computer, a notebook computer, a smart watch, a personal digital assistant (PDA), a networkable electronic reader, and the like. The domain name resolution server 120 and the authorized domain name server 130 may be independent physical servers or physical server clusters.

As shown in FIG.2, a server is provided according to an embodiment. The server may function as the domain name resolution server 120 in FIG.1 to implement a domain name resolution method. Referring to FIG.2, the server includes a processor, a memory, and a network interface that are connected via a system bus. The memory includes a non-volatile storage medium and an internal memory. The non-volatile storage medium of the server may store an operating system and computer-readable instructions. The computer-readable instructions, when being executed, may cause the processor to perform a domain name resolution method. The processor of the server is configured to perform computing and control to support running of the entire server. The internal memory of the server may store computer-readable instructions. The computer-readable instructions, when being executed by the processor, may cause the processor to perform a domain name resolution method. The network interface of the server is configured to communicate with an external terminal over a network, for example, receiving a domain name resolution request packet sent by the terminal and returning a domain name resolution response packet to the terminal. The server may be implemented as an independent server or implemented as a server cluster including multiple servers. A person skilled in the art should understand that, in the structure shown in FIG.2, only a block diagram of a part of structures related to a solution in this application is shown, and the block diagram does not limit the server to which the solution in this application is applied. Specifically, the server may include more or fewer components than those shown in FIG.2, some components may be combined, or the components may be arranged in a different manner.

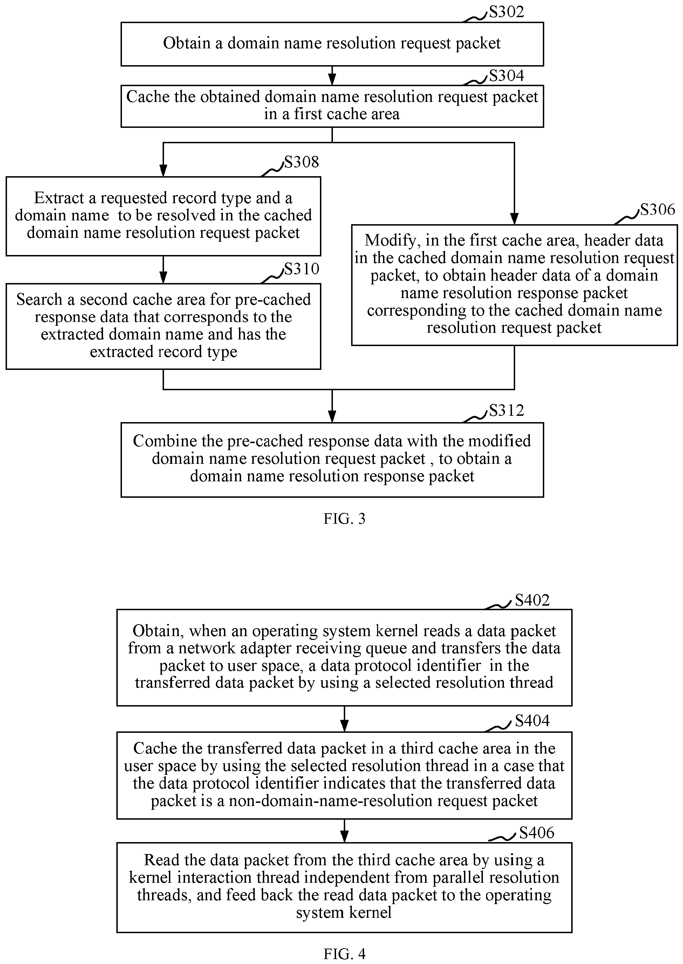

As shown in FIG.3, a domain name resolution method is provided according to the invention. It is described by using an example in which the method is applied to the domain name resolution server 120 in FIG.1. The method includes the following steps S302 to S312.

In step S302, a domain name resolution request packet is obtained.

The domain name resolution request packet is a data packet for requesting performing domain name resolution. A domain name is a name of a computer or a computer group on the Internet that includes a character string separated by points, and is used for identifying an electronic orientation of a computer during data transmission. The domain name resolution refers to a process of resolving a domain name into a record type to which the domain name resolution request packet points. The record type includes, for example, an address-pointing record type, a mail exchange record type, or an alias record type.

When obtaining a domain name inputted by a user and obtaining a request for accessing the Internet by using the domain name, a terminal may first determine a record type to which the request points, and search a local database or cache for a record that corresponds to the obtained domain name and has the record type to which the request points. If the record is found, the terminal accesses the Internet based on the record. If no record is found, the terminal encapsulates, based on a format of a domain name resolution request packet, the obtained domain name and the record type to which the request points, to generate a domain name resolution request packet, and sends the domain name resolution request packet to the domain name resolution server. The domain name resolution server receives the domain name resolution request packet sent by the terminal, to obtain the domain name resolution request packet.

In step S304, the obtained domain name resolution request packet is cached in a first cache area.

The first cache area refers to a cache area obtained by dividing a cache in the domain name resolution server, and is used for storing the obtained domain name resolution request packet. Specifically, the domain name resolution server receives a data packet via a network adapter, and may cache the received domain name resolution request packet in the first cache area through a process after receiving the domain name resolution request packet.

In an example not claimed, the domain name resolution server may start a network adapter driving process in a kernel space by using an operating system kernel to obtain a domain name resolution request packet received by the network adapter, and store the obtained domain name resolution request packet in a first cache area of the kernel space, to wait for a response from the operating system kernel.

In an example, which is not claimed, the domain name resolution server may pre-configure a data packet intercepting process running in the kernel space. After the network adapter driving process obtains the domain name resolution request packet received by the network adapter, a domain name resolution process in user space of the domain name resolution server may start the data packet intercepting process, and store, in a first cache area of the user space by using the data packet intercepting process, the domain name resolution request packet obtained by the network adapter driving process, to wait for a response from the domain name resolution process in the user space.

An operating system is configured to manage computer hardware and software. The kernel space refers to an area in which the operating system kernel is located, and a kernel function module runs in the kernel space. The user space refers to space in the operating system different from the kernel space. The network adapter is a network component operating in a link layer, and is configured to send and receive data packets. The network adapter driving process is a process invoked by the operating system kernel to obtain the data packet received by the network adapter and to send the data packet to the network adapter. The data packet intercepting process is a pre-configured process used for intercepting the data packet obtained by the network adapter driving process to the user space. For example, the domain name resolution server may pre-configure the data packet intercepting process by using a data plane development kit (DPDK). The configured data packet intercepting process can directly store and transfer the intercepted data packet to the user space without forwarding the intercepted data packet via the kernel space. The data packet intercepting process may be started by the operating system kernel, or may be started by the domain name resolution process in the user space.

In step S306, in the first cache area, header data in the cached domain name resolution request packet is modified, to obtain header data of a domain name resolution response packet corresponding to the cached domain name resolution request packet.

A domain name resolution data packet usually includes five parts: header data, a query problem, a response, an authorized response, and additional information. Usually, both the domain name resolution request packet and the domain name resolution response packet have a data packet format including the foregoing five parts. The header data is an essential part included in the domain name resolution data packet, and includes a domain name resolution data packet identifier, a domain name resolution data packet flag, the number of request problems, the number of resource records, the number of authorized resource records, and the number of additional resource records.

The domain name resolution data packet identifier is used for identifying the domain name resolution data packet. A domain name resolution request packet and a corresponding domain name resolution response packet have a same domain name resolution data packet identifier, and the domain name resolution data packet identifier may be used for matching the domain name resolution response packet that corresponds to the domain name resolution request packet. The domain name resolution data packet flag defines whether the domain name resolution data packet is a request packet or a response packet, also defines whether parts other than the header data are required to be included, and defines a query type. The number of request problems, the number of resource records, the number of authorized resource records, and the number of additional resource records respectively correspond to the number of query problems, the number of responses, the number of authorized responses, and the amount of additional information.

The domain name resolution server may first determine the header data of the domain name resolution response packet corresponding to the cached domain name resolution request packet, and determine, based on the determined header data of the domain name resolution response packet, difference data of the header data of the domain name resolution request packet and the header data of the domain name resolution response packet. The domain name resolution server may position the determined difference data in the first cache area, and modify the positioned difference data based on the header data of the domain name resolution response packet.

The difference data includes the domain name resolution data packet flag and the number of resource records. For example, a character representing a request packet in a domain name resolution data packet flag included in the received domain name resolution request packet is "0", and should be modified into "1" representing a response. The number of resource records is accordingly modified based on the number of request problems.

In step S308, a requested record type and a domain name to be resolved in the cached domain name resolution request packet are extracted.

The domain name requested in the domain name resolution request packet and the requested record type are encapsulated into a query problem part of the domain name resolution request packet. The domain name resolution server may resolve the domain name resolution request packet to obtain a resolution result after obtaining the domain name resolution request packet, and extract, from the resolution result, the domain name to be resolved in the domain name resolution request packet and the requested record type.

The requested record type includes, for example, an address-pointing record type, a mail exchange record type, or an alias record type. An address-pointing record, namely, an A (Address) record, is also referred to as IP (Internet Protocol) pointing. The address-pointing record is a record used for specifying an IP address corresponding to a host name or a domain name. A mail exchange record, namely, an MX (mail exchanger) record, is a record used for positioning a mail server based on an address suffix of an addressee when a mail is sent via an electronic mail system. The address suffix of the addressee points to an IP address of the mail server. An alias pointing record, namely a CNAME record, is also referred to as an alias record. The alias record is a record for mapping multiple names or domain names to a same computer. The record includes two domain names or names, and a first domain name points to a second domain name.

In step S310, a second cache area is searched for pre-cached response data that corresponds to the extracted domain name and has the extracted record type.

The second cache area is a cache area obtained by dividing the cache in the domain name resolution server, and is used for storing pre-encapsulated response data. The second cache area and the first cache area are different cache areas.

After each domain name resolution, the domain name resolution server may record a resolution result, and store a domain name resolution record in a database. The domain name resolution server may establish a connection to an authoritative domain name server, to detect whether a locally stored domain name resolution record is consistent with a corresponding domain name resolution record stored in the authoritative domain name server. If the two records are inconsistent, the corresponding domain name resolution record stored in the authoritative domain name server is synchronized to the local database. The detecting operation may be performed in a preset detection period, or may be performed when a current time instant goes beyond a cache deadline included in the domain name resolution record.

A format of the response data is fixed, and the domain name resolution server may encapsulate, according to a preset response format, the domain name resolution record stored in the database, to obtain the response data, and cache the response data in the second cache area. The response data is searched based on a requirement. The domain name resolution server may classify the obtained response data and cache the classified response data in the second cache area based on a record type of the response data. In a case that domain name resolution is to be performed, the domain name resolution server determines, based on the extracted record type, a response data set having the extracted record type, and then selects, from the determined response data set, pre-cached response data corresponding to the extracted domain name.

Alternatively, the domain name resolution server may classify the obtained response data and cache the classified response data in the second cache area based on a domain name of the response data. In a case that domain name resolution is to be performed, the domain name resolution server determines, based on the extracted domain name, a response data set corresponding to the extracted domain name, and then selects, from the determined response data set, pre-cached response data having the extracted record type.

Alternatively, the domain name resolution server may obtain the number of historical records corresponding to the locally stored domain name resolution record, rank the obtained response data in a descending order of the number of historical records corresponding to the domain name resolution record of the response data, and cache the ranked response data in the second cache area. In a case that domain name resolution is to be performed, the domain name resolution server searches for pre-cached response data that corresponds to the extracted domain name and has the extracted record type.

Steps S308 to S310 may be performed asynchronously with step S306.

In step S312, the pre-cached response data is combined with the modified domain name resolution request packet, to obtain a domain name resolution response packet.

The domain name resolution server may position the modified domain name resolution request packet cached in the first cache area, add the pre-cached response data to a tail of data included in the positioned domain name resolution request packet, and combine the response data with the cached domain name resolution request packet to obtain the domain name resolution response packet.

In the domain name resolution method, the obtained domain name resolution request packet is stored in the first cache area, the cached domain name resolution request packet is resolved in the first cache area, the header data in the domain name resolution request packet is modified into the header data of the corresponding domain name resolution response packet, and then the pre-cached response data is combined with the modified domain name resolution request packet, to obtain the domain name resolution response packet. The response data that is searched for is pre-stored in the second cache area; and after the response data is found, the response data can be directly combined with the modified domain name resolution request packet, thereby greatly improving the domain name resolution efficiency. In addition, after the response data is replicated from the second cache area to the first cache area, the domain name resolution process can be completed in the first cache area, thereby effectively reducing the number of data replications, and further improving the domain name resolution efficiency.

In an example, not falling in the scope of the claims, step S302 includes: obtaining, when an operating system kernel reads a data packet from a network adapter receiving queue and transfers the data packet to the user space, a data protocol identifier in the transferred data packet; and obtaining, in a case that the data protocol identifier indicates that the transferred data packet is a domain name resolution request packet, the domain name resolution request packet. In this embodiment, the first cache area and the second cache area are in the user space.

The data protocol identifier refers to an identifier of each layer of data protocol included in a data packet. In a case that a data packet is generated and is transmitted via a data link layer, a network layer, a transport layer, and the like, a data protocol identifier of a respective data protocol layer is added to the data packet. Various layers of data protocols included in different types of data packets have different identifiers. For example, a data protocol identifier of a data packet in the network layer is Transmission Control Protocol (TCP)/User Datagram Protocol (UDP), and a data packet of which a destination port in the transport layer is port 53 is a domain name resolution data packet.

The operating system kernel of the domain name resolution server may start the pre-configured data packet intercepting process, read the data packet from the network adapter receiving queue, and transfer the read data packet to the user space. The domain name resolution process in the user space obtains the data protocol identifier included in the transferred data packet, and detects the obtained data protocol identifier based on an identifier of each layer of data protocol matching the domain name resolution request packet. In a case that the obtained data protocol identifier is consistent with the identifier of each layer of data protocol matching the domain name resolution request packet, it is indicated that the transferred data packet is the domain name resolution request packet, and the domain name resolution process in the user space obtains the domain name resolution request packet.

Alternatively, in a case that the obtained data protocol identifier is inconsistent with the identifier of each layer of data protocol matching the domain name resolution request packet, it is indicated that the transferred data packet is a non-domain-name-resolution request packet, and the domain name resolution process in the user space feeds back the transferred data packet to the operating system kernel.

In this example, domain name resolution is directly performed, in the user space, on a data packet that is determined as the domain name resolution request packet without forwarding the data packet by the kernel space, thereby avoiding multiple data replications required during resolution in the kernel space, and thus improving the domain name resolution efficiency. In addition, a data packet that is determined as the non-domain-name-resolution request packet is fed back to the operating system kernel, thereby providing a manner of processing a data packet that cannot be resolved in the user space, and thus improving a success rate of data packet resolution.

In an example not falling under the scope of the claims, the domain name resolution method further includes: selecting a resolution thread in an idle mode from parallel resolution threads, and then performing step S302 to step S312 by using the selected resolution thread.

The resolution thread refers to a thread used for performing domain name resolution. The idle mode indicates that domain name resolution is not performed in a current time instant. Specifically, multiple parallel resolution threads are run in parallel in the domain name resolution process of the domain name resolution server, and the resolution threads are independent from each other. The domain name resolution process of the domain name resolution server may start the network adapter driving process to obtain the domain name resolution request packet received by the network adapter, and then select the resolution thread in the idle mode to perform the domain name resolution process on the obtained domain name resolution request packet.

In this example, the domain name resolution process is independently performed by the resolution thread, without data interaction processing with other threads, thereby avoiding a waiting process for data interaction processing between threads, and further improving the domain name resolution efficiency.

As shown in FIG.4, in an embodiment, the first cache area and the second cache area used in the domain name resolution method are in the user space. In the domain name resolution method, the process of obtaining a domain name resolution request packet by using the selected resolution thread includes steps S402 to S406 in the following.

In step S402, when an operating system kernel reads a data packet from a network adapter receiving queue and transfers the data packet to the user space, a data protocol identifier included in the transferred data packet is obtained by using the selected resolution thread.

The operating system kernel of the domain name resolution server may start the pre-configured data packet intercepting process, read the data packet from the network adapter receiving queue, and transfer the read data packet to the user space. Then, the domain name resolution server obtains the data protocol identifier included in the transferred data packet by using a resolution thread in the user space.

In step S404,the transferred data packet is cached in a third cache area in the user space by using the selected resolution thread, in a case that the data protocol identifier indicates that the transferred data packet is a non-domain-name-resolution request packet.

The domain name resolution server compares, by using the resolution thread in the user space, the obtained data protocol identifier with the identifier of each layer of data protocol matching the domain name resolution request packet. In a case that a comparison result indicates that the obtained data protocol identifier is inconsistent with the identifier of each layer of data protocol matching the domain name resolution request packet, the domain name resolution server determines that the transferred data packet is a non-domain-name-resolution request packet. The domain name resolution process in the user space caches the transferred data packet in the third cache area in the user space. The third cache area is a cache area obtained by dividing the cache in the domain name resolution server, and is used for storing the non-domain-name-resolution request packet transferred to the user space.

In step S406, the data packet is read from the third cache area by using a kernel interaction thread independent from the parallel resolution threads, and the read data packet is fed back to the operating system kernel.

The kernel interaction thread is a thread independent from the resolution thread that interacts with the kernel space. Specifically, the resolution thread in the user space cannot directly interact with the operating system kernel. Therefore, the non-domain-name-resolution request packet to be fed back to the operating system kernel is cached in the third cache area in the user space. Then, the kernel interaction thread that can interact with the operating system kernel and is independent from the parallel resolution threads reads the data packet from the third cache area, and caches the read data packet in a cache area in the kernel space. The resolution thread in the kernel space resolves the data packet cached in the cache area in the kernel space, and obtains a response packet corresponding to the resolution packet.

In this example, the non-domain-name-resolution request packet that cannot be resolved by the domain name resolution process in the user space is fed back to the operating system kernel, thereby avoiding a failure in resolving the non-domain-name-resolution request packet by the domain name resolution process in the user space, and improving a success rate of the data packet resolution.

In an example not falling under the scope of the claims, the domain name resolution method may further include: obtaining a data packet and caching the data packet in the first cache area; detecting, in the first cache area, a data protocol identifier in the data packet; and performing step S306 to step S310 in a case that the data protocol identifier indicates that the transferred data packet is a domain name resolution request packet, or feeding back the cached data packet to the operating system kernel in a case that the data protocol identifier indicates that the transferred data packet is a non-domain-name-resolution request packet.

In the domain name resolution method, after the operating system kernel reads the data packet from the network adapter receiving queue and transfers the data packet to the user space, the read data packet can be directly cached in the first cache area in the user space. The resolution thread in an idle mode is selected from the parallel resolution threads in the user space, and it is detected whether the data packet cached in the first cache area is a domain name resolution request packet. In a case that it is determined that the cached data packet is a domain name resolution request packet, step S306 to step S310 are performed by using the selected resolution thread. In a case that it is determined that the cached data packet is a non-domain-name-resolution request packet, an address pointer of the non-domain-name-resolution request packet in the first cache area is cached in the third cache area by using the selected resolution thread. Next, the kernel interaction thread independent from the parallel resolution threads reads the non-domain-name-resolution request packet from the first cache area based on the address pointer stored in the third cache area, and stores the non-domain-name-resolution request packet in the cache area in the kernel space. Then, the operating system kernel responds to the non-domain-name-resolution request packet stored in the cache area in the kernel space.

A pointer is a variant used for indicating a computer language of a memory address. An address pointer of a non-domain-name-resolution request packet in the second cache area points to a cache address of the non-domain-name-resolution request packet in the second cache area. The non-domain-name-resolution request packet is, for example, an Address Resolution Protocol (ARP) request packet or an Open Shortest Path First (OSPF) request packet.

In this embodiment, the data packet is directly cached in the first cache area. A domain name resolution operation is directly performed in a case that it is determined that the data packet is a domain name resolution request packet. Alternatively, in a case that it is determined that the data packet is a non-domain-name-resolution request packet, the non-domain-name-resolution request packet in the first cache area is fed back to the operating system kernel. In this way, the number of data replications is further reduced, and it is provided a manner of processing a data packet that cannot be resolved in the user space, thereby improving a success rate of data packet resolution.

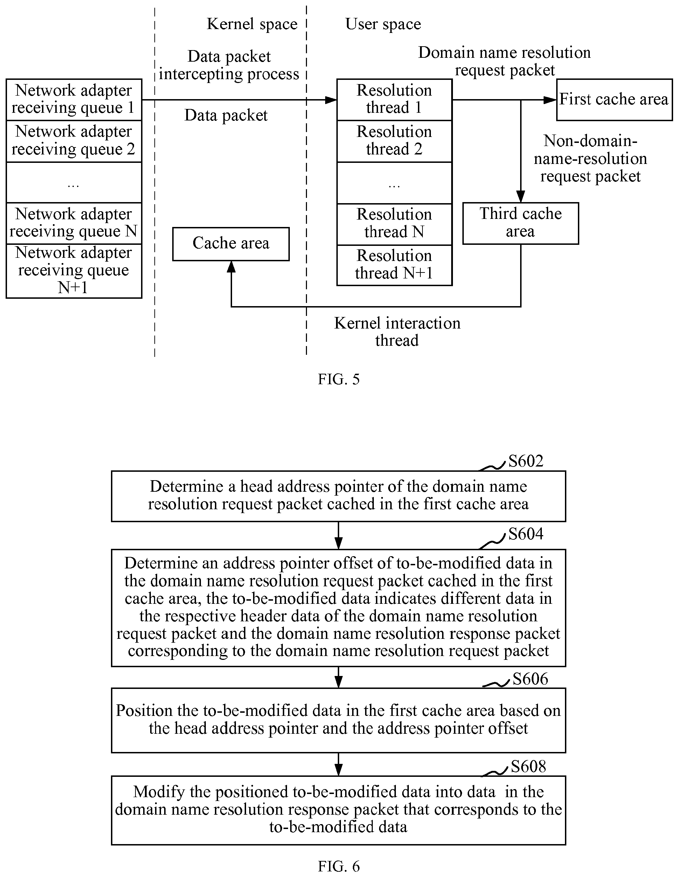

FIG.5 is an internal architectural diagram of a domain name resolution server according to an embodiment. Referring to FIG.5, system space of the domain name resolution server is divided into kernel space and user space. An operating system kernel may start a data packet intercepting process to read a data packet from a network adapter receiving queue and transfer the data packet to the user space. In a case that a resolution thread in the user space determines that the transferred data packet is a domain name resolution data packet, the transferred domain name resolution data packet is cached in a first cache area; or in a case that the resolution thread determines that the transferred data packet is a non-domain-name-resolution data packet, the transferred non-domain-name-resolution data packet is cached in a third cache area. A kernel interaction thread in the user space that is independent from the resolution thread caches, in a cache area in the kernel space, the non-domain-name-resolution data packet that is cached in the third cache area, so that the operating system kernel performs responding.

As shown in FIG.6, step S306 includes the following steps S602 to S608.

In step S602, a head address pointer of the domain name resolution request packet cached in the first cache area is determined.

After caching the obtained domain name resolution request packet in the first cache area, the domain name resolution server may store a head address pointer of the domain name resolution request packet in a temporary cache file or a log file. The domain name resolution server reads the head address pointer when it is required to modify data in the domain name resolution request packet.

In step S604, an address pointer offset of to-be-modified data in the domain name resolution request packet cached in the first cache area is determined. The to-be-modified data indicates different data in the respective header data of the domain name resolution request packet and the domain name resolution response packet corresponding to the domain name resolution request packet.

The domain name resolution server first determines the header data of the domain name resolution response packet corresponding to the cached domain name resolution request packet; based on the determined header data of the domain name resolution response packet, determine difference data of the header data of the domain name resolution request packet and the header data of the domain name resolution response packet; and use the determined difference data as the to-be-modified data.

Usually, division based on bytes is performed on data encapsulated in header data of a domain name resolution data packet. For example, a first byte and a second byte in the header data of the domain name resolution data packet indicate a domain name resolution data packet identifier, and a third byte and a fourth byte indicate a domain name resolution data packet flag. A first bit in a character field of the domain name resolution data packet flag is a flag bit, "0" represents the domain name resolution request packet, "1" represents the domain name resolution response packet, and the like. The domain name resolution server may determine the address pointer offset of the to-be-modified data based on a byte where the determined difference data is located.

In step S606, the to-be-modified data is positioned in the first cache area based on the head address pointer and the address pointer offset.

An address pointer of the to-be-modified data may be obtained by adding the address pointer offset of the to-be-modified data to the head address pointer of the domain name resolution request packet, and the domain name resolution server may determine a cache address of the to-be-modified data in the first cache area based on the obtained address pointer.

In step S608, the positioned to-be-modified data is modified into data in the domain name resolution response packet that corresponds to the to-be-modified data.

The domain name resolution server writes, in the determined cache address of the to-be-modified data in the first cache area, the header data of the domain name resolution response packet corresponding to the domain name resolution request packet. For example, a flag bit representing a data packet type is changed from a flag representing a request packet to a flag representing a response packet.

In the first cache area in which the domain name resolution request packet is cached, the header data of the domain name resolution request packet is directly modified into the header data of the domain name resolution response packet corresponding to the domain name resolution request packet, thereby avoiding real-time encapsulation of the domain name resolution response packet in a resolution process, reducing a response time, and further improving the domain name resolution efficiency.

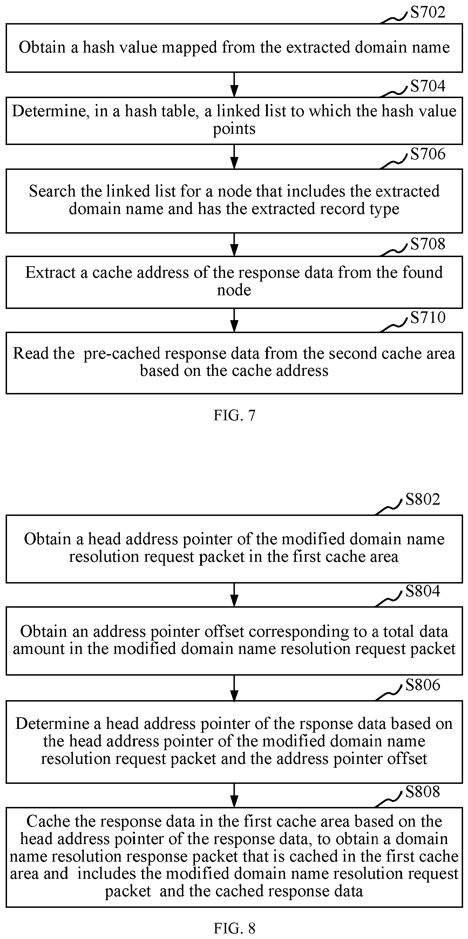

As shown in FIG.7, in an embodiment, step S310 includes the following steps S702 to S710.

In step S702, a hash value mapped from the extracted domain name is obtained.

The hash value is a smaller binary value that has a fixed length and is obtained by mapping a binary value having any length through a hash algorithm. For example, in the hash algorithm, American Standard Code for Information Interchange (ASCII) codes corresponding to all characters in a character string are accumulated. In this case, a hash value corresponding to a character string "ming" is 109+105+110+103=427. The domain name resolution server may calculate, based on a preset hash algorithm, a hash value mapped from the extracted domain name.

In step S704, a linked list to which the hash value points is determined in a hash table.

The hash table is a table used for storing, based on a mapping relationship between domain names and hash values, domain names and cache addresses of response data corresponding to the domain names. The hash value indicates a storage location in the hash table. A domain name and response data corresponding to the domain name are stored at a storage location indicated by a hash value mapped from the domain name. The linked list has a linked storage structure used for storing multiple data elements. In this embodiment, the linked list is a sub-list that stores domain names mapped to a same hash value and to which the same hash value points.

The domain name resolution server may pre-establish multiple hash tables based on the record type requested in the domain name resolution request packet, and each hash table stores cache addresses of response data having a same record type and corresponding domain names. The linked list to which the hash value points is determined in a hash table corresponding to the extracted request type. Alternatively, the domain name resolution server may store, in one hash table, a cache address of response data, a corresponding domain name, and a record type of the response data, and determine, in the hash table, the linked list to which the hash value points.

In step S706, the linked list is searched for a node that includes the extracted domain name and corresponds to the extracted record type.

Each element stored in the linked list is referred to as a node. Each node includes two parts: a data field storing a data element and a pointer field storing an address of a next node.

The domain name resolution server may compare, in the determined linked list, the extracted domain name with a domain name stored in the data field of each node, and determine that the node is a node to be searched for in a case that a domain name stored in the node is consistent with the extracted domain name,. The linked list used for searching belongs to a hash table having the extracted request type.

In a case that the domain name resolution server stores, in one hash table, a cache address of response data, a corresponding domain name, and a record type of the response data, the domain name resolution server compares, in the determined linked list, the extracted record type with a record type stored in a data field of each node, after successfully comparing, in the determined linked list, the extracted domain name with a domain name stored in a data field of each node. In a case that a record type stored in the node is consistent with the extracted record type, the node is determined as a node to be searched for.

In step S708, a cache address of the response data is extracted from the found node.

In step S710, the pre-cached response data is read from the second cache area based on the cache address.

The domain name resolution server may read cached data from a cache address in the second cache area, and the read cached data is the pre-cached response data.

In this embodiment, the hash table is searched for the cache address of the response data, and then the response data is read from a cache based on the found address, thereby avoiding a waste of time caused by directly searching each cache for the corresponding response data, greatly improving a searching speed, and further improving the domain name resolution efficiency.

In a case that the domain name resolution server does not find corresponding response data in the hash table, the domain name resolution server determines a primary domain name corresponding to the extracted domain name, and searches the hash table for response data that corresponds to the determined primary domain name and has a domain name starting record type. A domain name has a hierarchical structure that is layered according to a geographical domain or a mechanism domain. Layers are separated by using decimal points. The domain name includes a top-level domain name field, a second-level domain name field, and the like from right to left. The leftmost field is the primary domain name. For example, a requested domain name is www.xx.com, and a primary domain name of the requested domain name is xx.com. The domain name starting record indicates an authorized domain name server corresponding to the primary domain name.

In this embodiment, it is provided a processing method for a case that no response data corresponding to the requested record type and the domain name to be resolved in the domain name resolution request packet is found, and a domain name starting record is fed back, so that a domain name resolution requesting party can send a domain name resolution request to the authorized domain name server based on the domain name starting record, thereby improving a success rate of domain name resolution.

As shown in FIG.8, in an embodiment, step S312 includes the following steps S802 to S808.

In step S802, a head address pointer of the modified domain name resolution request packet in the first cache area is obtained.

After caching the obtained domain name resolution request packet in the first cache area, the domain name resolution server may store the head address pointer of the domain name resolution request packet in a temporary cache file or a log file, and read the head address pointer when it is required to modify data in the domain name resolution request packet. After the domain name resolution request packet is modified, the head address pointer remains unchanged.

In step S804, an address pointer offset corresponding to a total data amount of the modified domain name resolution request packet is obtained.

The domain name resolution server may detect the total data amount of the modified domain name resolution request packet, determine, based on the detected total data amount, a cache address interval in the first cache area of the modified domain name resolution request packet, and determine the address pointer offset based on a size of the address interval.

In step S806, a head address pointer of the response data is determined based on the head address pointer of the modified domain name resolution request packet and the address pointer offset.

The domain name resolution server may add the address pointer offset to the head address pointer of the modified domain name resolution request packet, to obtain the head address pointer of the response data.

In step S808, the response data is cached in the first cache area based on the head address pointer of the response data, to obtain a domain name resolution response packet that is cached in the first cache area and includes the modified domain name resolution request packet and the cached response data.

The determined head address pointer of the response data is a next cache address of a cache address of the last byte of data included in the modified domain name resolution request packet. The response data is cached in the first cache area based on the determined address pointer, to obtain the domain name resolution response packet that is cached in the first cache area and includes the modified domain name resolution request packet and the cached response data.

In this embodiment, in the domain name resolution process, both the domain name resolution request packet and the domain name resolution response packet are obtained in the first cache area. Provided that the response data found in the second cache area is replicated to a tail of data included in the domain name resolution request packet in the first cache area, the response data can be combined with the domain name resolution request packet to obtain the domain name resolution response packet, thereby improving the domain name resolution efficiency.

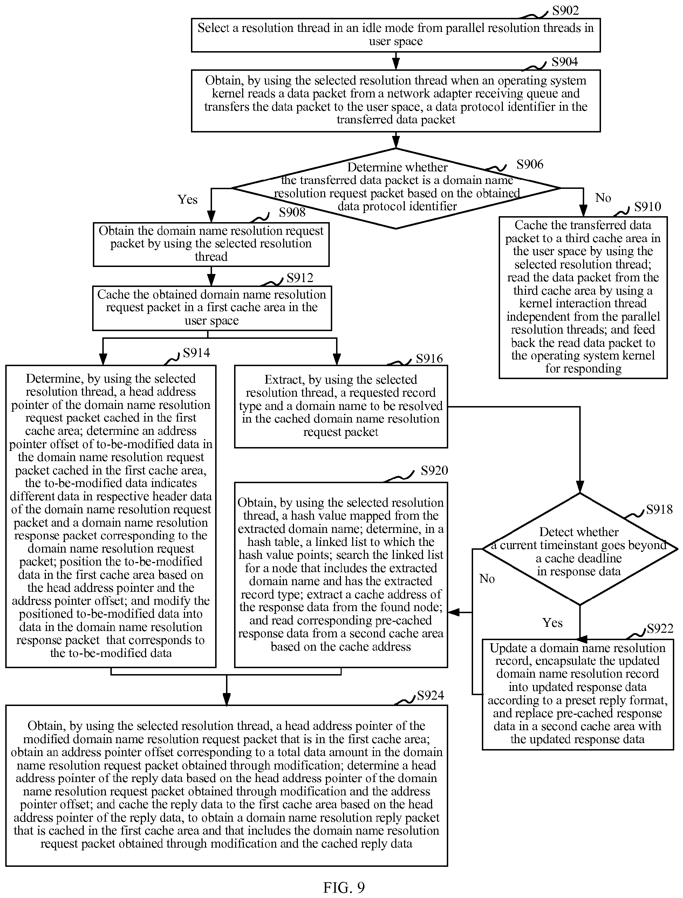

As shown in FIG.9, a domain name resolution method is provided according to an embodiment. The method includes the following steps S902 to S924.

In step S902, a resolution thread in an idle mode is selected from parallel resolution threads in user space.

In step S904, when an operating system kernel reads a data packet from a network adapter receiving queue and transfers the data packet to the user space, a data protocol identifier in the transferred data packet is obtained by using the selected resolution thread.

In step S906, it is determined whether the transferred data packet is a domain name resolution request packet based on the obtained data protocol identifier; and step S908 is performed if the transferred data packed is determined as a domain name resolution request packet, or step S910 is performed if the transferred data packet is determined as a non-domain-name resolution request packet.

In step S908, the domain name resolution request packet is obtained by using the selected resolution thread, and the method proceeds to step S912.

In step S910, the transferred data packet is cached in a third cache area in the user space by using the selected resolution thread; the data packet is read from the third cache area by using a kernel interaction thread independent from the parallel resolution threads; and the read data packet is fed back to the operating system kernel.

In step S912, the obtained domain name resolution request packet is cached in a first cache area in the user space.

In step S914, by using the selected resolution thread, a head address pointer of the domain name resolution request packet cached in the first cache area is determined; an address pointer offset of to-be-modified data in the domain name resolution request packet cached in the first cache area is determined, where the to-be-modified data indicates different data in respective header data of the domain name resolution request packet and a domain name resolution response packet corresponding to the domain name resolution request packet; the to-be-modified data is positioned in the first cache area based on the head address pointer and the address pointer offset; and the positioned to-be-modified data is modified into data in the domain name resolution response packet that corresponds to the to-be-modified data.

In step S916, by using the selected resolution thread, a requested record type and a domain name to be resolved in the cached domain name resolution request packet are extracted.

In step S918, it is detected whether a current time instant goes beyond a cache deadline included in the response data; the method proceeds to step S920 if the current time instant goes beyond the cache deadline, or the method proceeds to step S922 if the current time instant does not go beyond the cache deadline.

The cache deadline indicates a validity period of the response data. For each record type, a result obtained through domain name resolution is changeable. When the current time instant goes beyond the cache deadline included in the response data, it is required to detect whether a domain name resolution record encapsulated into the response data changes. In a case that the domain name resolution record does not change, the cache deadline included in the response data is reset.

In step S920, by using the selected resolution thread, a hash value mapped from the extracted domain name is obtained; a linked list to which the hash value points is determined in a hash table; the linked list is searched for a node that includes the extracted domain name and has the extracted record type; a cache address of the response data is extracted from the found node; and pre-cached response data is read from a second cache area based on the cache address.

In step S922, a domain name resolution record is updated, the updated domain name resolution record is encapsulated into updated response data according to a preset response format, pre-cached response data in the second cache area is replaced with the updated response data, and the method proceeds to step S920.

When the current time instant goes beyond the cache deadline included in the response data, the domain name resolution server may establish a connection to an authoritative domain name server, to detect whether a locally stored domain name resolution record is consistent with a corresponding domain name resolution record stored in the authoritative domain name server. If the two records are inconsistent, the locally stored domain name resolution record is updated based on the corresponding domain name resolution record stored in the authoritative domain name server, the updated domain name resolution record is encapsulated into the updated response data according to the preset response format, and the pre-cached response data in the second cache area is replaced with the updated response data.

In step S924, by using the selected resolution thread, a head address pointer of the modified domain name resolution request packet in the first cache area is obtained; an address pointer offset corresponding to a total data amount of the modified domain name resolution request packet is obtained; a head address pointer of the response data is determined based on the head address pointer of the modified domain name resolution request packet and the address pointer offset; and the response data is cached in the first cache area based on the head address pointer of the response data, to obtain a domain name resolution response packet that is cached in the first cache area and includes the modified domain name resolution request packet and the cached response data.

In this embodiment, the obtained domain name resolution request packet is stored in the first cache area in the user space, and the cached domain name resolution request packet is resolved in the first cache area by using a single resolution thread, thereby avoiding a waiting process for data interaction processing between threads, and improving the data processing efficiency. The response data to be searched for is pre-stored in the second cache area in the user space, and the response data can be directly combined with the modified domain name resolution request packet after the response data is found, thereby greatly improving the domain name resolution efficiency. In addition, all data required in the domain name resolution process is stored in the cache area in the user space without reading the data from a magnetic disk, thereby greatly improving a data processing speed. In addition, after the response data is replicated from the second cache area to the first cache area, the domain name resolution process can be completed in the first cache area, thereby effectively reducing the number of data replications, and further improving the domain name resolution efficiency.

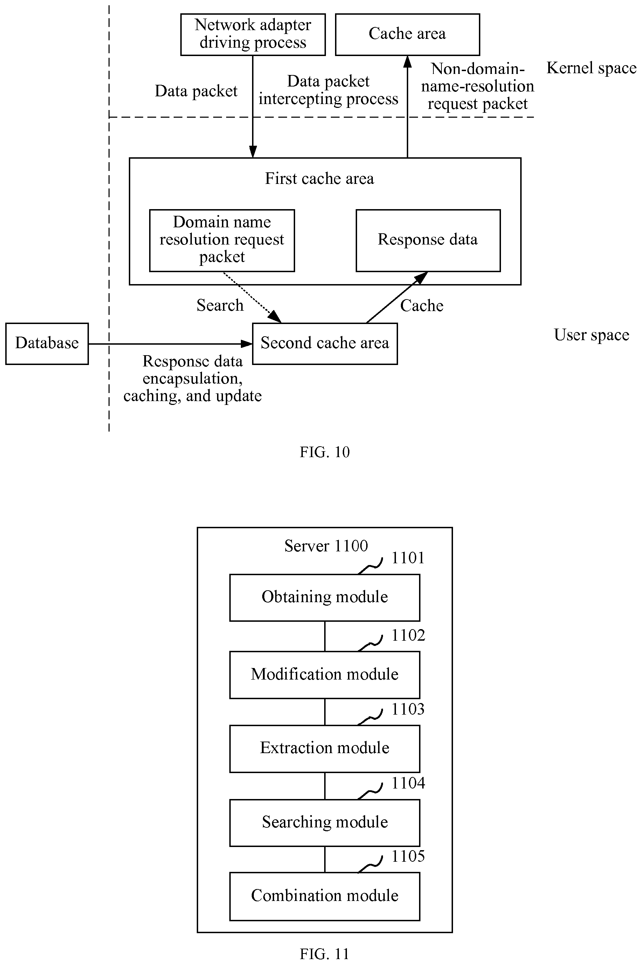

FIG. 10 is a logical diagram of a domain name resolution process according to an embodiment. Referring to FIG.10, system space of a domain name resolution server is divided into kernel space and user space. An operating system kernel may start a data packet intercepting process to transfer a data packet read by a network adapter driving process to the user space. The domain name resolution server caches a domain name resolution data packet in a first cache area in the user space; searches a second cache area in the user space for response data that has a requested record type and corresponds to a domain name to be resolved in the domain name resolution data packet; stores the found response data at a tail of a domain name resolution request packet in the first cache area; and modifies header data of the domain name resolution request packet to obtain a domain name resolution response packet. A non-domain-name-resolution response packet is fed back to an operating system kernel.

It should be understood that, the steps in the embodiments of this application are not necessarily performed in an order indicated by the step numbers. Unless otherwise clearly specified in this specification, the steps are performed without any strict sequence limit, and may be performed in other orders. In addition, at least some steps in the embodiments may include multiple sub-steps or multiple stages, and these sub-steps or stages are not necessarily performed at a same time instant, and may be performed at different time instants. The sub-steps or stages are not necessarily performed in sequence, and the sub-steps or stages may be performed alternately with at least some of other steps, sub-steps or stages of other steps.

As shown in FIG.11, a server 1100 is provided according to an embodiment. For an internal structure of the server 1100, one may refer to the structure shown in FIG.2. All of or a part of the following modules may be implemented by software, hardware, or a combination thereof. Referring to FIG.11, the server 1100 includes an obtaining module 1101, a modification module 1102, an extraction module 1103, a searching module 1104, and a combination module 1105.

The obtaining module 1101 is configured to obtain a domain name resolution request packet, and cache the obtained domain name resolution request packet in a first cache area.

The modification module 1102 is configured to modify, in the first cache area, header data included in the cached domain name resolution request packet, to obtain header data of a domain name resolution response packet corresponding to the cached domain name resolution request packet.

The extraction module 1103 is configured to extract a requested record type and a domain name to be resolved in the cached domain name resolution request packet.

The searching module 1104 is configured to search a second cache area for pre-cached response data that corresponds to the extracted domain name and has the extracted record type.

The combination module 1105 is configured to combine the found response data with the modified domain name resolution request packet, to obtain a domain name resolution response packet.

The server 1100 stores the obtained domain name resolution request packet in the first cache area, resolves the cached domain name resolution request packet in the first cache area, modifies the header data included in the domain name resolution request packet into the header data of the corresponding domain name resolution response packet, and then combines the found response data with the modified domain name resolution request packet, to obtain the domain name resolution response packet. The response data to be searched for is pre-stored in the second cache area, and the response data can be directly combined with the modified domain name resolution request packet after the response data is found, thereby greatly improving the domain name resolution efficiency. In addition, after the response data is replicated from the second cache area to the first cache area, the domain name resolution process can be completed in the first cache area, thereby effectively reducing the number of data replications, and further improving the domain name resolution efficiency.

In an example not falling under the scope of the claims, the obtaining apparatus 1101 is further configured to: obtain, when an operating system kernel reads a data packet from a network adapter receiving queue and transfers the data packet to the user space, a data protocol identifier in the transferred data packet; and obtain, in a case that the data protocol identifier indicates that the transferred data packet is a domain name resolution request packet, the domain name resolution request packet. In this embodiment, the first cache area and the second cache area are in the user space.

In this example, domain name resolution is directly performed, in the user space, on a data packet that is determined as a domain name resolution request packet without forwarding the data packet via the kernel space, thereby avoiding multiple data replications required during resolution in the kernel space, and improving the domain name resolution efficiency. In addition, a data packet that is determined as a non-domain-name-resolution request packet is fed back to the operating system kernel, thereby providing a manner of processing a data packet that cannot be resolved in the user space, and improving a success rate of data packet resolution.

In an embodiment, the searching module 1104 is further configured to: obtain a hash value mapped from the extracted domain name; determine, in a hash table, a linked list to which the hash value points; search the linked list for a node that includes the extracted domain name and has the extracted record type; extract a cache address of the response data from the found node; and read the pre-cached response data from the second cache area based on the cache address.

In this embodiment, the hash table is searched for the cache address of the response data, and then the response data is read from a cache based on the found address, thereby avoiding a waste of time caused by directly searching each cache for the corresponding response data, greatly improving a searching speed, and further improving the domain name resolution efficiency.

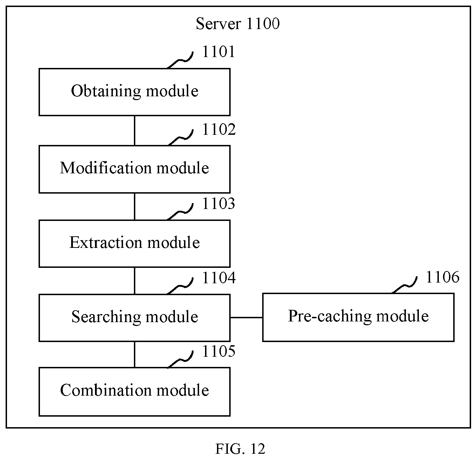

FIG.12 is a structural block diagram of the server 1100 according to example not falling under the scope of the claims, Referring to FIG.12, the server 1100 further includes a pre-caching module 1106.

The pre-caching module 1106 is configured to: update the domain name resolution record if a current time instant goes beyond a cache deadline included in the response data; encapsulate the updated domain name resolution record into updated response data according to a preset response format; and replace the pre-cached response data in the second cache area with the updated response data. The response data is obtained by encapsulating the domain name resolution record according to the preset response format.

In this example the obtained domain name resolution request packet is stored in the first cache area in the user space, and the cached domain name resolution request packet is resolved in the first cache area by using a single resolution thread, thereby avoiding a waiting process for data interaction processing between threads, and improving the data processing efficiency. The response data to be searched for is pre-stored in the second cache area in the user space, and the response data can be directly combined with the modified domain name resolution request packet after the response data is found, thereby greatly improving the domain name resolution efficiency. In addition, all data required in the domain name resolution process is stored in the cache area in the user space without reading the data from a magnetic disk, thereby greatly improving a data processing speed. In addition, after the response data is replicated from the second cache area to the first cache area, the domain name resolution process can be completed in the first cache area, thereby effectively reducing the number of data replications, and further improving the domain name resolution efficiency.

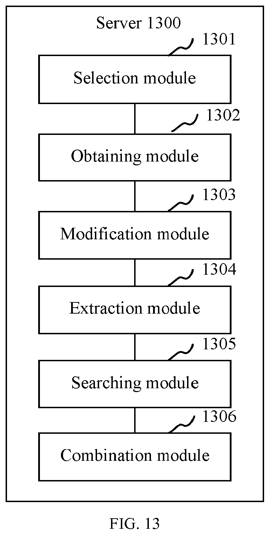

As shown in FIG. 13, a server 1300 is provided according to an embodiment. For an internal structure of the server 1300, one may refer to the structure shown in FIG.2. All or a part of modules in the following may be implemented by software, the hardware, or a combination thereof. Referring to FIG. 13, the server 1300 includes a selection module 1301, an obtaining module 1302, a modification module 1303, an extraction module 1304, a searching module 1305, and a combination module 1306.

The selection module 1301 is configured to select a resolution thread in an idle mode from parallel resolution threads.

The obtaining module 1302 is configured to obtain a domain name resolution request packet by using the selected resolution thread, and cache the obtained domain name resolution request packet in a first cache area.

The modification module 1303 is configured to modify, in the first cache area by using the selected resolution thread, header data in the cached domain name resolution request packet, to obtain header data of a domain name resolution response packet corresponding to the cached domain name resolution request packet.

The extraction module 1304 is configured to extract, by using the selected resolution thread, a requested record type and a domain name to be resolved in the cached domain name resolution request packet.

The searching module 1305 is configured to search, by using the selected resolution thread, a second cache area for pre-cached response data that corresponds to the extracted domain name and has the extracted record type.

The combination module 1306 is configured to combine, by using the selected resolution thread, the found response data with the modified domain name resolution request packet, to obtain a domain name resolution response packet.

In this embodiment, the domain name resolution process is independently performed by a resolution thread without involving data interaction processing performed with other threads, thereby avoiding a waiting process for data interaction processing between threads, and further improving the domain name resolution efficiency.

In an example not falling under the scope of the claims, the obtaining module 1302 is further configured to obtain, by using the selected resolution thread when an operating system kernel reads a data packet from a network adapter receiving queue and transfers the data packet to the user space, a data protocol identifier included in the transferred data packet; cache the transferred data packet in a third cache area in the user space by using the selected resolution thread, in a case that the data protocol identifier indicates that the transferred data packet is a non-domain-name-resolution request packet; and read the data packet from the third cache area by using a kernel interaction thread independent from the parallel resolution threads, and feed back the read data packet to the operating system kernel. In this embodiment, the first cache area and the second cache area are in the user space.

In this example the non-domain-name-resolution request packet that cannot be resolved by the domain name resolution process in the user space is fed back to the operating system kernel, thereby avoiding a failure in resolving the non-domain-name-resolution request packet by the domain name resolution process in the user space, and improving a success rate of data packet resolution.

A person of ordinary skill in the art may understand that all or some of the processes of the methods in the foregoing embodiments may be implemented by relevant hardware instructed by a computer program. The program may be stored in a non-volatile computer-readable storage medium. When the program is executed, the processes of the foregoing methods in the embodiments are performed. The memory, the storage, the database, or other medium used in the embodiments of the present application may each include a non-volatile and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of description rather than limitation, the RAM may include multiple types, such as a static RAM (SRAM), a dynamic RAM (DRAM), a synchronous DRAM (SDRAM), a double data rate SDRAM (DDRSDRAM), an enhanced SDRAM (ESDRAM), a synchlink (Synchlink) DRAM (SLDRAM), a rambus (Rambus) direct RAM (RDRAM), a direct rambus dynamic RAM (DRDRAM), and a rambus dynamic RAM (RDRAM).

## Claims

1. A domain name resolution method, comprising:
obtaining, by a server, a domain name resolution request packet;
storing, by the server, the obtained domain name resolution request packet in a first cache area;
modifying, by the server in the first cache area, header data in the stored domain name resolution request packet, to obtain header data of a domain name resolution response packet corresponding to the stored domain name resolution request packet, comprising:
determining a head address pointer of the domain name resolution request packet cached in the first cache area;
determining an address pointer offset of to-be-modified data in the domain name resolution request packet cached in the first cache area, the to-be-modified data indicates different data in the respective header data of the domain name resolution request packet and the domain name resolution response packet corresponding to the domain name resolution request packet;
positioning the to-be-modified data in the first cache area based on the head address pointer and the address pointer offset;
modifying the positioned to-be-modified data into data in the domain name resolution response packet that corresponds to the to-be-modified data;
extracting, by the server, a requested record type and a domain name to be resolved in the stored domain name resolution request packet;
searching, by the server, a second cache area for pre-stored response data that corresponds to the extracted domain name and has the extracted record type; and
combining, by the server, the pre-stored response data with the modified domain name resolution request packet, to obtain the domain name resolution response packet.

2. The method according to claim 1, wherein the searching, by the server, a second cache area for pre-stored response data that corresponds to the extracted domain name and has the extracted record type comprises:
obtaining, by the server, a hash value mapped from the extracted domain name;
determining, by the server in a hash table, a linked list to which the hash value points;
searching, by the server, the linked list for a node that comprises the extracted domain name and has the extracted record type;
extracting, by the server, a cache address of the response data from the found node; and
reading, by the server, the pre-stored response data from the second cache area based on the cache address.

3. The method according to claim 1, wherein the combining, by the server, the pre-stored response data with the modified domain name resolution request packet, to obtain a domain name resolution response packet comprises:
obtaining, by the server, a head address pointer of the modified domain name resolution request packet in the first cache area;
obtaining, by the server, an address pointer offset corresponding to a total data amount of the modified domain name resolution request packet;
determining, by the server, a head address pointer of the response data based on the head address pointer of the modified domain name resolution request packet and the address pointer offset; and
storing, by the server, the response data in the first cache area based on the head address pointer of the response data, to obtain a domain name resolution response packet that is stored in the first cache area and comprises the modified domain name resolution request packet and the stored response data

4. A server, comprising a memory and a processor, wherein the memory stores computer-readable instructions, and the computer-readable instructions, when being executed by the processor, cause the processor to perform the following steps:
obtaining a domain name resolution request packet;
storing the obtained domain name resolution request packet in a first cache area;
modifying, in the first cache area, header data in the stored domain name resolution request packet, to obtain header data of a domain name resolution response packet corresponding to the stored domain name resolution request packet comprising:
determining a head address pointer of the domain name resolution request packet cached in the first cache area;
determining an address pointer offset of to-be-modified data in the domain name resolution request packet cached in the first cache area, the to-be-modified data indicates different data in the respective header data of the domain name resolution request packet and the domain name resolution response packet corresponding to the domain name resolution request packet;
positioning the to-be-modified data in the first cache area based on the head address pointer and the address pointer offset;
modifying the positioned to-be-modified data into data in the domain name resolution response packet that corresponds to the to-be-modified data;
extracting a requested record type and a domain name to be resolved in the stored domain name resolution request packet;
searching a second cache area for pre-stored response data that corresponds to the extracted domain name and has the extracted record type; and
combining the pre-stored response data with the modified domain name resolution request packet, to obtain a domain name resolution response packet.

5. A non-volatile storage medium storing computer-readable instructions, wherein the computer-readable instructions, when being executed by one or more processors, cause the one or more processors to perform the domain name resolution method according to any one of claims 1 to 3.

## Patentansprüche

1. Ein Verfahren zur Auflösung von Domänennamen, das Folgendes umfasst:
Erhalt eines Domänennamenauflösungs-Anforderungspakets durch einen Server;
Speichern des erhaltenen Domänennamenauflösungs-Anforderungspakets durch den Server in einem ersten Cache-Bereich;
Modifizieren von Header-Daten in dem gespeicherten Domänennamenauflösungs-Anforderungspaket durch den Server in dem ersten Cache-Bereich, um Header-Daten eines Domänennamenauflösungs-Antwortpakets zu erhalten, das dem gespeicherten Domänennamenauflösungs-Anforderungspaket entspricht, umfassend:
Bestimmen eines Header-Adresszeigers des im ersten Cachebereich zwischengespeicherten Domänennamenauflösungs-Anforderungspakets;
Bestimmen eines Adresszeiger-Offsets von zu modifizierenden Daten in dem Domänennamenauflösungs-Anforderungspaket, das in dem ersten Cache-Bereich zwischengespeichert ist, wobei die zu modifizierenden Daten unterschiedliche Daten in den jeweiligen Header-Daten des Domänennamenauflösungs-Anforderungspakets und des Domänennamenauflösungs-Antwortpakets anzeigen, die dem Domänennamenauflösungs-Anforderungspaket entsprechen;
Positionieren der zu modifizierenden Daten im ersten Cache-Bereich auf der Grundlage des Header-Adresszeigers und des Adresszeiger-Offsets;
Modifizierung der positionierten zu modifizierenden Daten in Daten im Domänennamenauflösungs-Antwortpaket, die den zu modifizierenden Daten entsprechen;
Extrahieren eines angeforderten Datensatztyps und eines aufzulösenden Domänennamens aus dem gespeicherten Domänennamenauflösungs-Anforderungspaket durch den Server;
Durchsuchen eines zweiten Cachebereichs durch den Server nach vorgespeicherten Antwortdaten, die dem extrahierten Domänennamen entsprechen und den extrahierten Datensatztyp aufweisen; und
Kombinieren der vorgespeicherten Antwortdaten mit dem modifizierten Domänen-namenauflösungs-Anforderungspaket durch den Server, um das Domänennamenauflösungs-Antwortpaket zu erhalten.

2. Verfahren nach Anspruch 1, wobei das Durchsuchen eines zweiten Cache-Bereichs nach vorgespeicherten Antwortdaten, die dem extrahierten Domainnamen entsprechen und den extrahierten Datensatztyp aufweisen, durch den Server umfasst:
Erlangung eines Hash-Wertes durch den Server, der aus dem extrahierten Domänennamen gebildet wird;
Bestimmung einer verknüpften Liste, auf die der Hash-Wert zeigt, durch den Server in einer Hash-Tabelle;
Durchsuchen der verknüpften Liste durch den Server nach einem Knoten, der den extrahierten Domänennamen enthält und den extrahierten Datensatztyp aufweist;
Extrahieren einer Cache-Adresse der Antwortdaten von dem gefundenen Knoten durch den Server; und
Lesen der vorgespeicherten Antwortdaten aus dem zweiten Cache-Bereich durch den Server auf der Grundlage der Cache-Adresse.

3. Verfahren nach Anspruch 1, wobei das Kombinieren der vorgespeicherten Antwortdaten mit dem modifizierten Domänennamenauflösungs-Anforderungspaket durch den Server, um ein Domänennamenauflösungs-Antwortpaket zu erhalten, umfasst:
Erhalten, durch den Server, eines Header-Adresszeigers des modifizierten Domänennamenauflösungs-Anforderungspakets im ersten Cache-Bereich;
Erhalten, durch den Server, eines Adresszeiger-Offsets, der einer Gesamtdatenmenge des modifizierten Domänennamenauflösungs-Anforderungspakets entspricht;
Bestimmen, durch den Server, eines Header-Adresszeigers der Antwortdaten, basierend auf dem Header-Adresszeiger des modifizierten Domänennamenauflösungs-Anforderungspakets und dem Adresszeiger-Offset; und
Speichern der Antwortdaten im ersten Cachebereich durch den Server auf der Grundlage des Header-Adresszeigers der Antwortdaten, um ein Domänennamenauflösungs-Antwortpaket zu erhalten, das im ersten Cachebereich gespeichert ist und das modifizierte Domänennamenauflösungs-Anforderungspaket und die gespeicherten Antwortdaten umfasst.

4. Ein Server, der einen Speicher und einen Prozessor umfasst, wobei der Speicher computerlesbare Anweisungen speichert und die computerlesbaren Anweisungen, wenn sie von dem Prozessor ausgeführt werden, den Prozessor veranlassen, die folgenden Schritte durchzuführen:
ein Domänennamenauflösungs-Anforderungspaket erhalten;
Speichern des erhaltenen Domänennamenauflösungs-Anforderungspakets in einem ersten Cache-Bereich;
Modifizieren von Header-Daten in dem gespeicherten Domänennamenauflösungs-Anforderungspaket in dem ersten Cache-Bereich, um Header-Daten eines Domänennamenauflösungs-Antwortpakets zu erhalten, das dem gespeicherten Domänennamenauflösungs-Anforderungspaket entspricht, das Folgendes umfasst:
Bestimmen eines Header-Adresszeigers des im ersten Cachebereich zwischengespeicherten Domänennamenauflösungs-Anforderungspakets;
Bestimmen eines Adresszeiger-Offsets von zu modifizierenden Daten in dem Domänennamenauflösungs-Anforderungspaket, das in dem ersten Cache-Bereich zwischengespeichert ist, wobei die zu modifizierenden Daten unterschiedliche Daten in den jeweiligen Header-Daten des Domänennamenauflösungs-Anforderungspakets und des Domänennamenauflösungs-Antwortpakets anzeigen, die dem Domänennamenauflösungs-Anforderungspaket entsprechen;
Positionieren der zu modifizierenden Daten im ersten Cache-Bereich auf der Grundlage des Header-Adresszeigers und des Adresszeiger-Offsets;
Modifizierung der positionierten zu modifizierenden Daten in Daten im Domänennamenauflösungs-Antwortpaket, die den zu modifizierenden Daten entsprechen;
Extrahieren eines angeforderten Datensatztyps und eines aufzulösenden Domänennamens aus dem gespeicherten Domänennamenauflösungs-Anforderungspaket;
Durchsuchen eines zweiten Cachebereichs nach vorgespeicherten Antwortdaten, die dem extrahierten Domänennamen entsprechen und den extrahierten Datensatztyp aufweisen; und
Kombinieren der vorgespeicherten Antwortdaten mit dem modifizierten Domänennamenauflösungs-Anforderungspaket, um ein Domänennamenauflösungs-Antwortpaket zu erhalten.

5. Nichtflüchtiges Speichermedium, das computerlesbare Anweisungen speichert, wobei die computerlesbaren Anweisungen, wenn sie von einem oder mehreren Prozessoren ausgeführt werden, den einen oder die mehreren Prozessoren veranlassen, das Verfahren zur Auflösung von Domänennamen nach einem der Ansprüche 1 bis 3 durchzuführen.

## Revendications

1. Procédé de résolution de nom de domaine, comprenant:
obtenir, par un serveur, un paquet de demande de résolution de nom de domaine;
mettre en mémoire, par le serveur, le paquet de demande de résolution de nom de domaine obtenu dans une première zone de cache;
modifier, par le serveur à la première zone de cache, une donnée d'entête dans le paquet de demande de résolution de nom de domaine, pour obtenir une donnée d'entête d'un paquet de réponse de résolution de nom de domaine correspondant au paquet de demande de résolution de nom de domaine mis en mémoire, comprenant:
déterminer un pointeur d'adresse d'entête du paquet de demande de résolution de nom de domaine caché dans la première zone de cache;
déterminer un pointeur d'adresse décalé de la donnée à modifier dans le paquet de demande de résolution de nom de domaine caché dans la première zone de cache, la donnée à modifier indiquant une donnée différente dans la donnée d'entête respective du paquet de demande de résolution de nom de domaine et le paquet de réponse de résolution de nom de domaine correspondant au paquet de demande de résolution de nom de domaine;
mettre la donnée à modifier en position dans la première zone de cache sur la base du pointeur d'adresse d'entête et du décalage du pointeur d'adresse;
modifier la donnée à modifier mise en position en une donnée dans le paquet de réponse de résolution de nom de domaine, qui correspond à la donnée à modifier;
extraire, par le serveur, un type d'enregistrement demandé et un nom de domaine à résoudre dans le paquet de demande de résolution de nom de domaine mise en mémoire;
rechercher, par le serveur, une deuxième zone de cache pour une donnée de réponse mise en mémoire au préalable, qui correspond au nom de domaine extrait et qui a le type d'enregistrement extrait; et
combiner, par le serveur, la donnée de réponse mise en mémoire au préalable au paquet de demande de résolution de nom de domaine modifié pour obtenir le paquet de réponse de résolution de nom de domaine.

2. Procédé suivant la revendication 1, dans lequel la recherche, par le serveur, d'une deuxième zone de cache pour une donnée de réponse mise en mémoire au préalable, qui correspond au nom de domaine extrait et au type d'enregistrement extrait comprend:
obtenir, par le serveur, une valeur de hash établie en correspondance à partir du nom de domaine extrait;
déterminer, par le serveur dans une table de hash, une liste de liaison, sur laquelle pointe la valeur de hash;
rechercher, par le serveur, la liste de liaison pour un noeud, qui comprend le nom de domaine extrait et a le type d'enregistrement extrait;
extraire, par le serveur, une adresse de cache de la donnée de réponse, à partir du noeud trouvé; et
lire, par le serveur, la donnée de réponse, mise en mémoire préalable, dans la deuxième zone de cache sur la base de l'adresse de cache.

3. Procédé suivant la revendication 1, dans lequel la combinaison, par le serveur, de la donnée de réponse mise en mémoire au préalable au paquet de demande de résolution de nom de domaine modifié, pour obtenir un paquet de réponse de résolution de nom de domaine comprend:
obtenir, par le serveur, un pointeur d'adresse d'entête du paquet de demande de résolution de nom de domaine modifié dans la première zone de cache;
obtenir, par le serveur, un décalage de pointeur d'adresse correspondant à une quantité totale de données du paquet de demande de résolution de nom de domaine modifié;
déterminer, par le serveur, un pointeur d'adresse d'entête de la donnée de réponse sur la base du pointeur d'adresse d'entête du paquet de demande de résolution de nom de domaine modifié et du décalage du pointeur d'adresse; et
mettre en mémoire, par le serveur, la donnée de réponse dans la première zone de cache sur la base du pointeur d'adresse d'entête de la donnée de réponse, pour obtenir un paquet de réponse de résolution de nom de domaine, qui est mis en mémoire dans la première zone de cache, et qui comprend le paquet de demande de résolution de nom de domaine modifié et la donnée de réponse mise en mémoire.

4. Serveur, comprenant une mémoire et un processeur, dans lequel la mémoire met en mémoire des instructions déchiffrables par ordinateur, et les instructions déchiffrables par ordinateur, lorsqu'elles sont exécutées par le processeur, font que le processeur effectue les stades suivants:
obtenir un paquet de demande de résolution de nom de domaine;
mettre en mémoire le paquet de demande de résolution de nom de domaine obtenu dans une première zone de cache;
modifier, à la première zone de cache, une domaine d'entête dans le paquet de demande de résolution de nom de domaine pour obtenir une donnée d'entête d'un paquet de réponse de résolution de nom de domaine correspondant au paquet de demande de résolution de nom de domaine mis en mémoire, comprenant:
déterminer un pointeur d'adresse d'entête du paquet de demande de résolution de nom de domaine, caché dans la première zone de cache;
déterminer un pointeur d'adresse décalé de la donnée à modifier dans le paquet de demande de résolution de nom de domaine caché dans la première zone de cache, la donnée à modifier indiquant une donnée différente dans la donnée d'entête respective du paquet de demande de résolution de nom de domaine et le paquet de réponse de résolution de nom de domaine correspondant au paquet de demande de résolution de nom de domaine;
mettre la donnée à modifier en position dans la première zone de cache sur la base du pointeur d'adresse d'entête et du décalage du pointeur d'adresse;
modifier la donnée à modifier mise en position en une donnée dans le paquet de réponse de résolution de nom de domaine, qui correspond à la donnée à modifier;
extraire un type d'enregistrement demandé et un nom de domaine à résoudre dans le paquet de demande de résolution de nom de domaine mis en mémoire;
rechercher une deuxième zone de cache pour une donnée de réponse mis en mémoire au préalable, qui correspond au nom de domaine extrait et qui a le type d'enregistrement extrait; et
combiner la donnée de réponse mise en mémoire au préalable au paquet de demande de résolution de nom de domaine modifié pour obtenir le paquet de réponse de résolution de nom de domaine.

5. Support de mémoire non volatile mettant en mémoire des instructions déchiffrables par ordinateur, qui, lorsqu'elles sont exécutées par un ou par plusieurs processeurs font que le processeur ou les processeurs effectue le procédé suivant l'un quelconque des revendications 1 à 3.
